# EUROPEAN PATENT SPECIFICATION

(11) **EP 3 853 066 B1**
(45) Date of publication and mention of the grant of the patent: **29.10.2025**
(21) Application number: 19773027.8
(22) Date of filing: 17.09.2019
(51) Int. Cl.: B60N 2/28

(54) **CHILD SAFETY SEAT WITH SIDE IMPACT ENERGY ABSORPTION**
KINDERSICHERHEITSSITZ MIT SEITENAUFPRALLENERGIEABSORPTION
SIÈGE DE SÉCURITÉ POUR ENFANT À ABSORPTION D'ÉNERGIE D'IMPACT LATÉRAL

(30) Priority: 19.09.2018 NO 20181219
(43) Date of publication of application: 28.07.2021
(73) Proprietor: HTS Hans Torgersen & Sønn AS, 3535 Krøderen (NO)
(72) Inventor: VAN MOURIK, Okke, 3514 BS Utrecht (NL); VAN DER VEER, Erik, 3533 Utrecht (NL)
(74) Representative: Acapo Onsagers AS
(86) International application number: PCT/EP2019/074881
(87) International publication number: WO 2020/058273

(56) References cited:
- WO-A1-2014/053009
- CN-A- 105 946 645
- DE-A1- 102015 113 836
- US-A1- 2015 091 344

## Description

The present invention relates to energy-absorbing apparatus, and in particular, to devices for absorbing and dispersing energy associated with external impact forces. More particularly, the present invention relates to a child safety seat provided with devices for absorbing and dispersing of energy.

Child safety seats are employed for safely transporting children in vehicles, in particular in automobiles. There is a large variety of child safety seats adapted for transporting children of different age ranges. A child safety seat generally comprises a rigid main body adapted to receive and securely hold a child or infant and a base for supporting the main body. The rigid main body of the child safety seat may be integrated with the base of the child safety seat, or the rigid main body of the child safety seat and the base of the child safety seat may be releasably connected with each other.

The rigid main body usually includes a seat portion in which the child or infants sits (or lies) a backrest portion extending from the seat portion against which the child or infants rests and a head portion. The rigid main body also typically includes protective wings or walls raising vertically out from the rigid main body, such covering the upper body and head of the child or infant.

Furthermore, the rigid main body is often padded with different energy or cushioning materials and/or elements, which materials and/or elements will reduce the forces a child is exposed to during a collision (i.e. a side impact crash), for instance when head or other parts of the child "hits" the child safety seat, as these forces may be very high.

The forces acting on a child or infant sitting in a child safety seat during a crash of the vehicle carrying the child safety seat are influenced by the way the child safety seat is "connected" to the vehicle, i.e. by how the child safety seat is fixed to the vehicle seat on which the child safety seat is placed.

The child safety seat may, for instance, be fixed on a vehicle seat by employing a seat belt provided in the vehicle for fixing and securing the child safety seat. Through this method, at least one of the seat belts of the vehicle is guided in a prescribed way around or through the child safety seat thus securing the child safety seat in the desired position and orientation. An advantage of this method is that it exclusively makes use of fastening means that are usually present in every vehicle, i.e. the seat belts of the vehicle. Securing a child safety seat with a seat belt may, however, be cumbersome. Therefore, in practice, many child safety seats of this type are incorrectly installed in the vehicle.

A second method for fixing the child safety seat on a vehicle seat may employ means which are provided in the vehicle specifically for securing a child safety seat. In Europe, a so-called ISOFIX system has been introduced for this purpose. A vehicle seat adapted for installation of an ISOFIX child safety seat comprises anchors (ISOFIX anchors) which are provided at the lower end of the vehicle seat's seatback at the junction between the seat cushion and the seatback and which are fixedly attached to the vehicle seat. The child safety seat comprises latches (ISOFIX connectors) which can be releasably connected to the anchors. Consequently, using the ISOFIX system a child safety seat can be easily and safely fixed to a vehicle seat.

The purpose of the above methods is to minimize the relative movement of the child safety seat with respect to the vehicle. During rapid acceleration or deceleration of the vehicle, such a movement may nevertheless occur. As a rule, the child safety seat is arranged in the vehicle such that it will not hit on an obstacle in the interior of the vehicle during this displacement movement.

In the case of a heavy braking process or the impact of the vehicle on an obstacle in longitudinal direction of the vehicle, the child safety seat may consequently as compared to the vehicle, be decelerated in a delayed manner, so that the child safety seat is displaced on the vehicle seat in the driving direction of the vehicle.

Correspondingly, the relative movement of the child safety seat in longitudinal direction of the vehicle is thus usually decelerated and restricted by the seat fastening means.

The situation in the case of a relative movement of the child safety seat in a transverse direction of the vehicle is essentially different. Such a movement may, for instance, be caused by the impact of another vehicle on a side of the vehicle in the transverse direction of the vehicle. Since the child safety seat is usually arranged on one side of the vehicle seat (i.e. towards a door of the vehicle), the child safety seat will have a minor lateral distance to the inner side of the vehicle. This distance is, generally, not sufficient to sufficiently decelerate the relative movement of the child safety seat by means of the fastening means.

In the case of a side impact on the vehicle comprising the child safety seat there will therefore be the danger that the child safety seat hits the inner side of the vehicle at a speed that is not unsubstantial. In the case of such a side impact the lateral movement of the child safety seat is stopped within very short time, which corresponds to a large/strong deceleration. This deceleration in turn causes a substantial force on the child in the child safety seat by which the child may be severely injured.

Similar injuries of the child may be caused by an impact of objects on the child safety seat in lateral direction. These may be pieces of luggage that are to be found in the vehicle, intruding objects (vehicle door) etc. The effect of this is, as described above, a force on the child safety seat which potentially endangers the child.

GB 2.536.124 A relates to a safety seat, typically for a vehicle, where the safety seat includes a space for receiving the upper body of a child, and, a buffer unit that is disposed at two lateral ends of the space and that is made of a soft material, such as solid foam. The safety seat may additionally comprise a seat body comprising main portion and opposing side portions and a side protection unit. The side protection unit may include a first side protecting member disposed on an inner side of the first side portion of the seat body, and a second side protection member disposed on an inner side of the second side portion of the seat body. The safety seat may comprise a headrest body that is arranged on an inner side of the seat body. A headrest protecting member may be disposed on an inner side of the headrest body. The buffer unit may be connected to the side protecting unit. The side protecting unit may be formed from expandable polystyrene.

GB 2.520.616 A relates to a child safety seat comprising an inner wall, and an inner space is enclosed by the inner wall, where the seat further includes a buffer plate layer and a first foam cushion disposed in the inner space, and the first foam cushion is disposed between the buffer plate and the inner wall. The buffer plate may be more rigid than the first foam cushion. The buffer plate or first foam cushion or both may extend around a lateral or side or head or backrest portion of the child seat. A second foam cushion may extend in front of the buffer plate. A first cover may extend over the buffer plate. A second cover may extend over the first foam cushion. Upon collision, a child bumps into the buffer plate and the buffer plate is forced towards the first foam cushion so that a thrust surface area of the first foam cushion gets larger, leading to decreased pressure upon the first foam cushion.

AU 2013248252 B2 relates to a child restraint comprising a body for receiving an occupant, the body comprising surfaces directed inwardly and outwardly with respect to the occupant, and an aperture extending through the body and between a pair of opposing inwardly and outwardly directed body surfaces, and a cushioning element extending though the aperture and comprising an inwardly directed portion providing cushioning of the inwardly directed body surface, and an outwardly directed portion providing cushioning of the outwardly directed body surface. An associated headrest and cushioning element for a child restraint are also disclosed.

EP 2.993.078 B1 relates to a child safety seat, where the child safety seat includes a seat shell being divided into a sitting portion, a backrest portion and a headrest portion, where one or more of said portions furthermore is being provided with protective walls at least along a part of their lengths, where a stiff foam material is arranged at least on an inside of the seat shell and supported thereby, where the stiff foam material at least over a part of each of the protective side walls is provided with at least one through-going opening, in which at least one through-going opening a softer foam material is arranged, the softer foam material being a compressible resilient foam material.

US 2015/091344 A1 relates to a child restraint, where the child restraint includes a juvenile vehicle seat and an energy-absorption apparatus coupled to the juvenile vehicle seat. The energy-absorption apparatus is configured to absorb external energy associated with an external impact force applied to the energy-absorption apparatus.

GB 2.536.124 A relates to a safety seat, typically for a vehicle, where the safety seat includes a space for receiving the upper body of a child, and, a buffer unit that is disposed at two lateral ends of the space and that is made of a soft material, such as solid foam. The safety seat may additionally comprise a seat body comprising main portion and opposing side portions and a side protection unit. The side protection unit may include a first side protecting member disposed on an inner side of the first side portion of the seat body, and a second side protection member disposed on an inner side of the second side portion of the seat body. The safety seat may comprise a headrest body that is arranged on an inner side of the seat body. A headrest protecting member may be disposed on an inner side of the headrest body. The buffer unit may be connected to the side protecting unit. The side protecting unit may be formed from expandable polystyrene.

WO 2014/053009 A1 relates to an energy attenuation system for a child safety seat comprising a cushion member mountable to the child safety seat, the cushion member having a rear portion and/or a pair of wing portions to define a space into which the child is to be received, wherein a surface of the rear portion and/or the wing portions of the cushion member comprises a resilient material extending over at least one air cavity formed within the cushion member, such that impact between the surface of the child's head and the resilient material causes the air cavity to be compressed to absorb energy associated with said impact.

CN 105 946 645 A relates to a child safety seat, where spring dampers are added to a base, a backrest and a headrest and the like of a child safety seat, so as to be favorable for buffering and energy absorption during collision and reduce the injury to children's bodies caused by the collision. FIX unlocking, a foot rest and a safety belt assembly of the seat are optimized, and the practicality is achieved; an anti-splashing assembly is added, and the injury to children caused by splash during collision is avoided.

Therefore, it is an object of the present invention to provide an impact energy absorbing device and a child safety seat which provides an improved protective effect of the child safety seat in the case of a side collision with the vehicle.

This object is solved by an impact energy absorbing device and a child safety seat for use in a vehicle in accordance with the invention with the features of independent claims 1 and 15. Advantageous embodiments of the present invention are indicated in dependent claims.

The present invention concerns a child safety seat for use on a passenger seat of a vehicle, which child safety seat can be fastened to the passenger seat of the vehicle by attachment means provided in the vehicle, for instance a safety seat belt such as a three-point safety belt or standard anchorage units (so-called Isofix connectors).

The present invention relates to an impact energy absorbing device for a child safety seat adapted for receiving a child, where the impact energy absorbing device comprises an edge and a sheet, where the edge extends over at least a part of a periphery of the sheet, forming a support for the sheet and where the sheet is provided with a plurality of through-going incisions, a number of through-going incisions alternating between a positive and negative slope or gradient over their length.

The respective through-going incisions have a nonlinear shape or form, and may, for instance, be designed to have a V-shaped form or a U-shaped form. However, a person skilled in the art would know that the through-going incisions could be designed to have other forms or shapes.

In one exemplary embodiment according to the present invention the sheet may be provided with a plurality of through-going incisions, where all the through-going incisions may have the same shape or form, or where the through-going incisions may have different shape or form.

The sheet may also be divided into different areas or zones, where, for instance, one of the areas or zones may be provided with a number of through-going incisions having one shape or form, while another area or zone may be provided with a number of through-going incisions having a different shape or form. Furthermore, the areas or zones may be arranged spaced apart each other, such acting as separate or independent or free-standing areas or zones, or the areas or zones may be arranged subsequently following each other, without a "transition" between them.

If the areas or zones are arranged spaced apart each other, the through-going incisions provided in the different areas or zones may have the same shape or form.

It could also be envisaged that the through-going incisions provided within one area or zone could have different shape or form.

The through-going incisions may also be designed with different lengths (i.e. distance along the incision) and/or thicknesses/widths (i.e. the height of the incision).

Furthermore, the through-going incisions may also be provided with an even distance or space between them or with different distance(s) or space(s) between them. The sheet may then be divided into several areas or zones, where one area or zone may be provided with through-going incisions having the same form or shape and same distance or space between them, while another area or zone may be provided with through-going incisions having a different form or shape (or same form or shape) but where the distance or space between the through-going incisions in this area or zone is different than the distance or space between the through-going incisions provided in the first area or zone.

According to one aspect of the present invention, the sheet may be designed to have same or different cross-sectional thickness over its surface.

According to one aspect of the present invention the edge and the sheet may be designed to form an angle between them.

According to one aspect of the present invention, the impact energy absorbing device may be designed to have a substantially U-shaped form, when seen in a cross-section, where, for instance, each of the sides of the U and a bottom of the U is provided with a plurality of through-going incisions, thereby forming three areas or zones in the impact energy absorbing device. The through-going incisions provided in the sides of the U may then have the same shape or form, while the through-going incisions provided in the bottom of the U may have a different shape or form than the through-going incisions provided in the sides of the U. Furthermore, the through-going incisions may be provided with different lengths (i.e. distance along the incision) and/or thicknesses/widths (i.e. the height of the incision).

The edge forming the support for the sheet may, over at least a part of its length, be provided with a plurality of elongated openings. In one embodiment the elongated openings may have a linear form.

Furthermore, the through-going incisions and the elongated openings may have the same or different length, the same or different height etc.

Through the above arrangement of the impact energy absorbing device, the impact energy absorbing device will, due to its flexibility, during a side impact, contribute stopping the child's movement towards the side wings of the child safety seat, by absorbing the energy and preventing a sudden stop. When choosing the material (i.e. E-modulus etc.) for the impact energy absorbing device and geometry properties (i.e. wall thickness, distance or space between the through-going incisions, shape, length and/or width of the through-going incisions etc.) the flexibility of the sheet can be adjusted.

The present invention also relates to a child safety seat comprising a seat body adapted for receiving a child, the seat body comprising a sitting portion, a backrest portion and a headrest portion and where first and second side wings extend over at least a part of the seat body, wherein the child safety seat further comprises at least one impact energy absorbing device according to one or more embodiments and/or aspects as described above.

In one embodiment according to the present invention each of the side wings of the child safety seat may comprise at least one impact energy absorbing device, where the impact energy absorbing device(s) may be arranged to extend over a part or the entire surface of each side wing, thereby providing a protection for the upper body and head of the child using the child safety seat, or also the entire body of an infant using the child safety seat.

An inwardly facing interior surface of each side wing may then be provided with at least one hollow or recess, where the hollow or recess is to accommodate the impact energy absorbing device.

The at least one hollow or recess may then be designed such that the hollow or recess completely encircles or encloses the impact energy absorbing device. In such an embodiment the impact energy absorbing device will not extend beyond or outside the side wing but be arranged within the outer peripheries of the side wings.

In another embodiment the hollow or recess may be designed such that the hollow or recess only partly encircles or encloses the impact energy absorbing device, whereby the impact energy absorbing device may extend beyond or outside the side wing.

The inwardly facing interior surface of each side wing may also be provided with at least one cutout or notch, where the cutout or notch is formed to receive an edge of the impact energy absorbing device. However, it should be understood that the impact energy absorbing device could be provided with fastening means, whereby the fastening means could be used to connect the impact energy absorbing device to the cutout or notch.

In accordance with embodiments of the disclosure, the child safety seat may comprise a headrest. The headrest may be integrally formed in the child safety seat or may be adjustable and comprise an independently movable section of the child safety seat. In accordance with the disclosure, the headrest section may have "wing" portions that extend outwardly from the back portion of the child safety seat to provide protection for the head of a child seated in the child safety seat.

In one exemplary embodiment according to the present invention the headrest may comprise at least one impact energy absorbing device, where the impact energy absorbing device may have a U-shaped form when seen in a longitudinal cross-section of the impact energy absorbing device. Each side of the U and a bottom of the U may then be provided with a plurality of incisions, thereby providing three zones in the impact energy absorbing device, where each zone is divided through an area not being provided with through-going incisions.

By varying the shape or form, length and/or thickness of the through-going incisions in the areas or zones, the flexibility of the impact absorbing device may be adjusted.

Furthermore, the edge at each end of the impact energy absorbing device may be provided with a plurality of elongated openings, where the plurality of elongated openings may extend over at least a part of a circumference of the edge.

The child safety seat according to the present invention may comprise fastening means for fastening the child safety seat to a seat of a vehicle. The fastening means may be in the form of Isofix connectors and/or the child safety seat may be provided with seat belt guiding grooves, slits or the like over its surface, such that a three-point seat belt of the vehicle may be arranged in or over the guiding grooves, slits or the like in order to fasten the child safety seat to the vehicle seat.

The child safety seat according to the present invention may be a rotatable seat, such that the child safety seat can be rotated from a forward-facing position to a rearward facing position (and vice versa) or may be a fixed child safety seat, where the child safety seat must be lifted and turned between the forward-facing position and the rearward-facing position. The rotatable child safety seat may also be arranged to allow the child safety seat to be turned to at least one position between the forward facing and the backward facing position, for instance to a position facing a vehicle door, in order to ease the placing of a child or infant in the child safety seat and when the child or infant is to be taken out of the child safety seat.

Furthermore, the child safety seat may be adjustable or movable between an upright position and a reclined position, where the upright position is used when the child is awake, and the reclined position is used when the child is to sleep or is already sleeping.

In one embodiment of the present invention, the child safety seat is to be connected to corresponding anchoring means provided in the vehicle seat of the vehicle, whereby two Isofix connectors are connected to the frame structure. The Isofix connectors are connected to the frame structure with a distance between them. The Isofix connectors may be arranged fixedly to the frame structure, such that they cannot move relative the frame structure, but the Isofix connectors may also be arranged to be extendable from and retractable into the frame structure, such that the child safety seat could be adapted to different models of vehicles, as the vehicle seats, vehicle seat belts, anchorage points etc. can vary greatly between the models. Furthermore, the Isofix connectors may also be pivotable relative the frame structure, such that they could be adapted to different inclination of the sitting section of the vehicle seat.

One end of the Isofix connector comprises a latch or a clip that will engage with anchorage points in the vehicle seat. As these latches and anchorage points are used as standards, a skilled person will know how these are designed, and will therefore not be described further in the description.

A person skilled in the art would know that the child safety seat according to the present invention could also be designed to be used with safety seat belt provided in the vehicle, whereby the child safety seat would be provided with guiding grooves, slits or the like for the safety seat belt. Furthermore, it should be understood that the child safety seat according to the present invention may be provided without the Isofix connectors, whereby the child seat is used with the safety seat belt.

The foregoing and other features of the present invention will become apparent to one skilled in the art to which the present invention relates upon consideration of the following description of the invention with reference to the accompanying drawings, wherein:
Figure 1 shows a first embodiment of an impact energy absorbing device according to the present invention, from above,
Figures 2A-2B show in a perspective view a first embodiment of a child safety seat according to the present invention, the child safety seat comprising two impact energy absorbing devices, where figure 2A shows the impact energy absorbing device arranged in the child safety seat and figure 2B shows the impact energy absorbing device before arranged in the child safety seat,
Figures 3A-3B show in a perspective view a second embodiment of a child safety seat according to the present invention, the child safety seat comprising three impact energy absorbing devices, where figure 3A shows the impact energy absorbing devices arranged in the child safety seat and figure 3B shows the impact energy absorbing devices before arranged in the child safety seat,
Figures 4A-4D shown additional embodiments of the impact energy absorbing device according to figure 1, seen from above, and
Figure 5 shows an alternative embodiment of the impact energy absorbing device not according to the present invention.

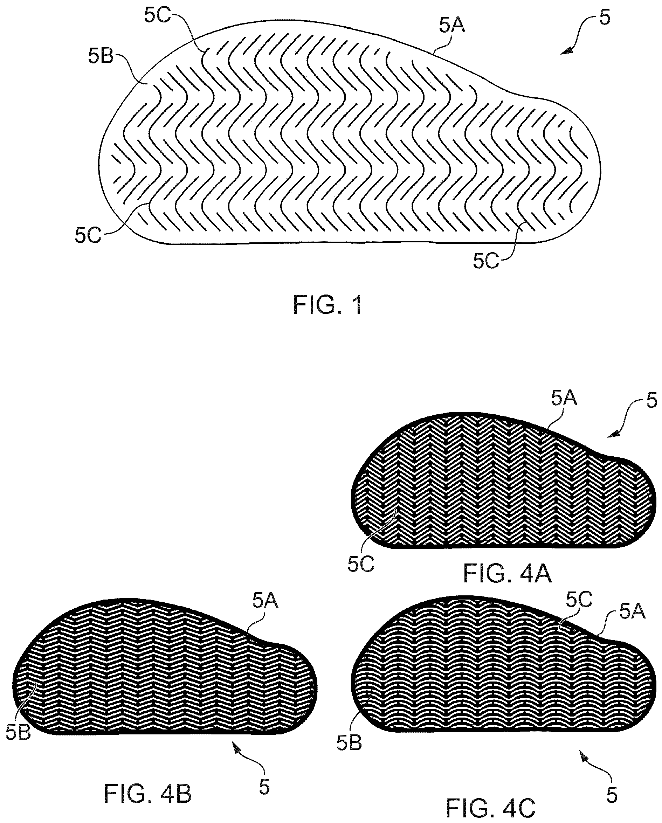

Figure 1 shows a first embodiment of an impact energy absorbing device 5 according to the present invention, where the impact energy absorbing device 5 will, due to its flexibility, during a side impact, stop the child's or infant's movement towards protective side wings 3 provided in a child safety seat 1, by absorbing the impact energy and avoiding a sudden stop.

The impact energy absorbing device 5 comprises an edge 5A and a sheet 5B, where the edge 5A and the sheet 5B are connected to each other through their outer peripheries, whereby the sheet 5B will form a bottom or top in the impact energy absorbing device 5.

The edge 5A extends over at least a part of the periphery of the sheet 5B, thereby forming a support for the sheet 5B when the impact energy absorbing device 5, for instance, is arranged in a hollow 4 or recess provided in the protective side wings 3 of the child safety seat 1. Furthermore, the edge 5A extends also a distance out from the sheet 5B, where this distance may vary around the periphery of the sheet 5B.

The sheet 5B is provided with a plurality of non-linear and through-going incisions 5C over its surface, where the plurality of the through-going incisions 5C arranged in a specific pattern to "weaken" the sheet 5B in order to provide a flexibility in the sheet 5B. Some linear slits may also be provided in the sheet 5B, where these slits may be arranged around edges of the sheet 5B.

In this embodiment according to the present invention, the through-going incisions 5C have a shape in the form of a V, where a number of the through-going incisions 5C will alternate between a positive and negative gradient over their length. This alternation between positive and negative gradient will also provide a sheet 5B where the solid parts (i.e. the parts of the sheet that are left when the through-going incisions are made) are bound up with each other, thereby forming a continuous or coherent surface over the sheet 5B.

The impact energy absorbing device 5 is preferably fabricated from polypropylene PP.

Furthermore, in this embodiment all the through-going incisions 5C have the same shape or form, and the through-going incisions 5C are arranged with an equal distance between them.

However, as shown in figures 4A-4C, the through-going incisions 5C may have different shapes or forms, length and height etc., where figure 4A show an impact energy absorbing device 5 provided with a plurality of through-going incisions 5C having a more acute V-form, figure 4B show an impact energy absorbing device 5 provided with a plurality of through-going incisions 5C having a longer length than the through-going incisions 5C according to figure 4A and figure 4C show an impact energy absorbing device 5 provided with a plurality of incisions 5C having a shape in the form of a U.

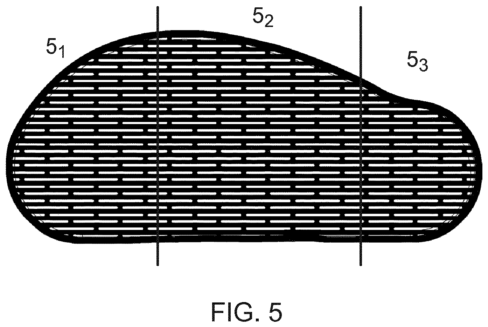

According to another aspect of the present invention, the sheet 5B may be divided into different areas or zones, where the plurality of through-going incisions 5C provided in one area or zone have a different shape or form than the plurality of through-going incisions 5C provided in another area or zone. This aspect is shown in figure 5 (although the linear incisions displayed does not themselves fall under the invention), where the impact energy absorbing device 5 is divided into three areas or zones 5₁, 5₂ and 5₃, where the plurality of through-going incisions 5C provided in the areas or zones 5₁ and 5₃ have the same form, while the plurality of through-going incisions provided in the area or zone 5₂ will have a different form.

It can also be envisaged that the plurality of through-going incisions 5C provided in the different areas or zones have the same shape or form, but where the through-going incisions 5C are arranged with different distances between them between the different areas or zones. Yet an alternative could be to vary a length (i.e. the distance along the incision) and/or thickness/width (i.e. the height of the incision) of the through-going incisions 5C for the different areas or zones.

Through the above arrangement of the impact energy absorbing device 5, the flexibility of the impact energy absorbing device 5 may be adapted to the different child safety seats, i.e. a child safety seat for an older child may be provided with less flexible impact energy absorbing devices 5, while a child safety seat for an infant may be provided with more flexible impact energy absorbing devices 5.

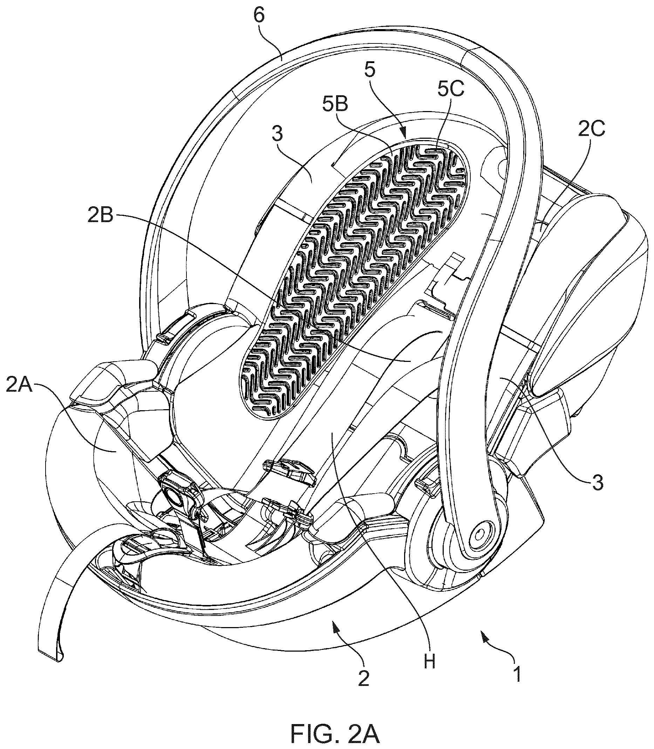

Figures 2A-2B show a first embodiment of a child safety seat 1 according to the present invention, where the child safety seat 1 comprises a seat body 2 adapted to receive and securely hold an infant (not shown). The child safety seat 1 may be connected to a base (not shown), where the base may comprise an adjustable floor support and fastening means in form of two Isofix connectors, such that the base can be securely fixed to a sitting portion of a vehicle seat (not shown) by means of the Isofix connectors and supported by the adjustable floor support.

The seat body 2 comprises a sitting portion 2A, a backrest portion 2B and a headrest portion 2C. Opposite first and second side portions are connected respectively to two opposite lateral sides of the seat body 2 and extends out from each side of the seat body 2, where the first and second side portions will form protective wings 3 in the seat body 2, so as to protect the child or infant during a side impact collision.

The protective wings 3 will extend over at least a part of the sitting portion 2A, the backrest portion 2B and the headrest portion 2C, thereby providing a protection for an upper part of the body and head of an older child or also providing a protection for an entire body of an infant.

The seat body 2 is constructed with a rigid core, where at least a part of the rigid core that forms a space adapted to receive and securely hold the child or infant is covered with a stiff foam.

The rigid core is preferably made from polypropylene PP or similar polymeric material such as presently found in conventional child safety seats. However, a person skilled in the art would know that a wide variety of substantially rigid materials may be used for the rigid core, including but not limiting to plastics, metals or rigid fiber materials, such as carbon-fiber, or other matrices that may include fibers, resins, plastics or combinations of these materials.

The stiff foam is preferably fabricated from lightweight foam, such as expanded polystyrene foam EPS. Other materials from which the stiff foam may be formed include urethane, expanded polypropylene EPP and other foamable materials which otherwise meet the product and regulatory requirements.

Furthermore, a harness assembly H is connected to the child safety seat 1, where the harness assembly H may be a conventional five-point or three-point harness.

A carrying handle 6 is also connected to the child safety seat.

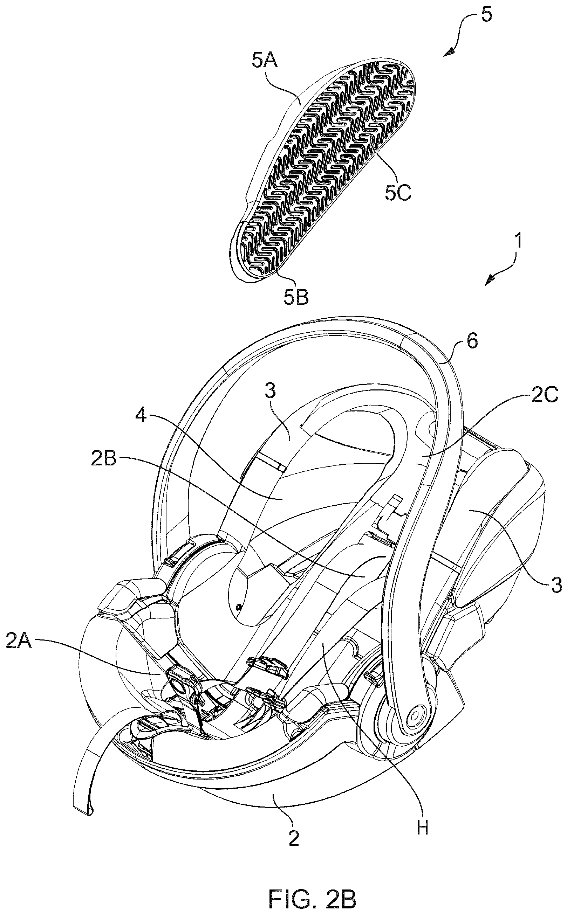

As can be seen from figure 2B, each of the protective side wings 3 is on an inside (i.e. the side of the protective side wings 3 facing each other and the space adapted to receive and securely hold the child or infant) provided with a hollow 4 or recess (only one of the side wings is shown provided with the hollow 4 or recess), where the recess 4 or hollow is formed in such a way that the protective side wing 3 will entirely enclose the hollow or recess 4.

Furthermore, the hollow 4 or recess extends only partly through the protective side wing 3, such that the hollow 4 or recess will not extend through the protective side wings 3.

The hollow 4 or recess will be of such a size that it will cover an area corresponding to the head, neck and at least a part of the child's upper body or an area corresponding to the entire body of an infant.

An impact energy absorbing device 5 is arranged in each of the protective side wings 3 hollow 4 or recess, whereby the impact energy absorbing device 5 is designed to have the same form as the hollow 4 or recess.

The impact energy absorbing device 5 may be connected or fixed to the hollow 4 or recess in suitable ways, for example by gluing, through quick coupling or the like.

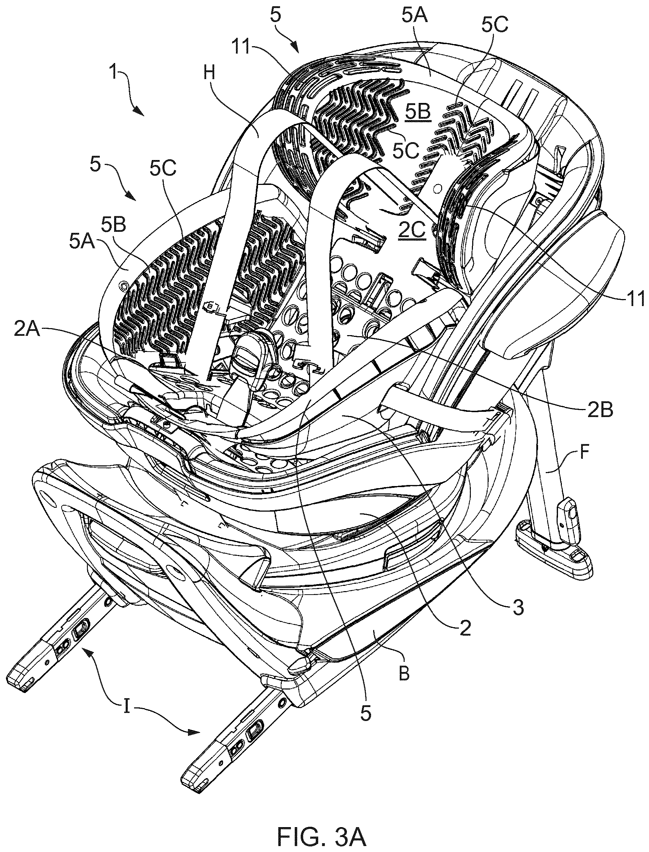

Figures 3A-3B 1 shows a second embodiment of a child safety seat 1 according to the present invention, where the child safety seat 1 comprises a seat body 2 adapted to receive and securely hold a child or an infant (not shown). The child safety seat 1 is connected to a base B, where the base B comprises an adjustable floor support F and fastening means in form of two Isofix connectors I, such that the base B can be securely fixed to a sitting section of a vehicle seat (not shown) by means of the Isofix connectors I and supported by the adjustable floor support F.

The seat body 2 comprises a sitting portion 2A, a backrest portion 2B and a headrest portion 2C and a harness assembly H that properly positions and restrains the child or infant when seated in the child safety seat 1. The harness assembly H may be a conventional five-point or three-point harness.

A person skilled in the art would know how to arrange such a harness assembly H, whereby this is not described any further herein.

Opposite first and second side portions are connected respectively to two opposite lateral sides of the seat body 2 and extends out from each side of the seat body 2, where the first and second side portions will form the protective side wings 3 in the seat body 2, so as to protect the child or infant during a side impact collision.

The protective side wings 3 extend over at least a part of the sitting portion 2A, the backrest portion 2B and the headrest portion 2C, thereby providing a protection for an upper part of the body and head of an older child or also providing a protection for an entire body of an infant.

The seat body 2 is constructed with a rigid core, where a part of the rigid core that forms a space adapted to receive and securely hold the child or infant is covered with a stiff foam. However, it is to be understood that also an outer surface of the rigid core may be covered with the stiff foam.

Furthermore, the seat body 2 is designed to form a sitting portion 2A, a backrest portion 2B and a headrest portion 2C in the child safety seat 1, where the backrest portion 2B extends from the sitting portion 2A and further into the headrest portion 2C.

The rigid core is preferably made from polypropylene PP or similar polymeric material such as presently found in conventional child safety seats. However, a person skilled in the art would know that a wide variety of substantially rigid materials may be used for the rigid core, including but not limiting to plastics, metals or rigid fiber materials, such as carbon-fiber, or other matrices that may include fibers, resins, plastics or combinations of these materials.

The stiff foam is preferably made from lightweight foam, such as expanded polystyrene foam EPS. Other materials from which the stiff foam may be formed include urethane, expanded polypropylene EPP and other foamable materials that otherwise meet the product and regulatory requirements.

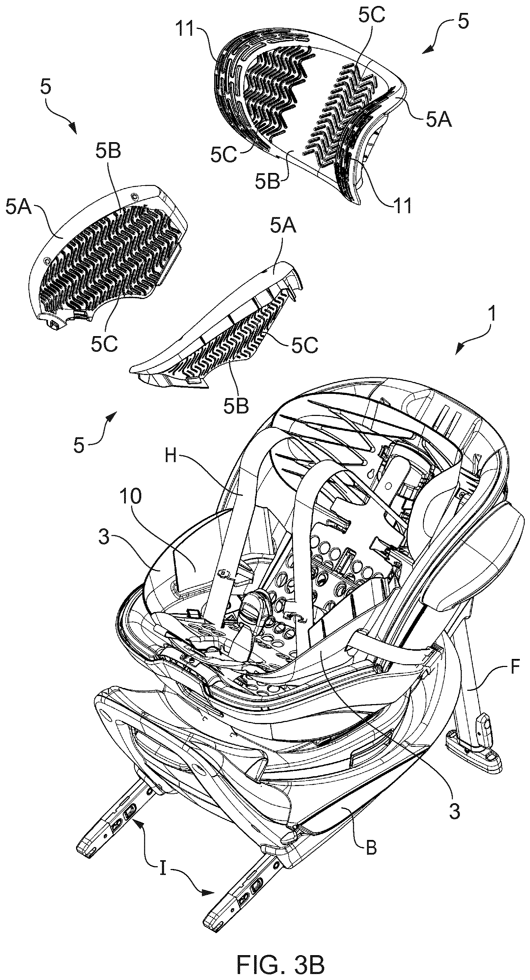

As can be seen from figure 3B, each of the protective side wings 3 is on an inside (i.e. the side of the protective side wings 3 facing each other and the space adapted to receive and securely hold the child or infant) provided with a cutout 10 or notch (only one of the side wings is shown provided with the cutout 10 or notch), where the cutout 10 or notch is formed to receive the edge 5A of the impact energy absorbing device 5.

An impact energy absorbing device 5 is fixed in the cutout 10 or notch provided in the side wings 3.

The impact energy absorbing device 5 may be connected or fixed to the cutout 10 or notch in suitable ways, for example by gluing, through quick coupling or the like.

A skilled person will know that the impact energy absorbing device 5 can be fixed or connected to the protective side wings 3 and/or the seat body 2 in other ways.

An additional impact energy absorbing device 5 is also connected to the child safety seat 1, where this impact energy absorbing device 5 will form the headrest in the child safety seat 1. The impact energy absorbing device 5 in form of the headrest have a U-shaped form, when seen in cross-section, where each of the sides of the U and a bottom of the U is provided with a plurality of through-going incisions 5C, thereby forming three areas or zones in the impact energy absorbing device 5.

The through-going incisions 5C provided in the sides of the U may then have the same shape or form, while the through-going incisions 5C provided in the bottom of the U may have a different shape or form than the through-going incisions 5C provided in the sides of the U. Furthermore, the through-going incisions 5C may be provided with different lengths (i.e. distance along the incision) and/or thicknesses/widths (i.e. the height of the incision).

The edge 5A forming the support for the sheet 5B is, over at least a part of its length, and in an area around the rounded edges, provided with a plurality of elongated openings 11.

A skilled person will know that the impact energy absorbing device 5 in form of the headrest is connected to the seat body 2 in different ways, whereby this is not described any further herein. Furthermore, the impact energy absorbing device 5 in form of the headrest may be arranged to be movable up and down in the child safety seat 1, to adjust it to a correct height of the child or infant.

The invention has now been explained with different embodiments. Only elements related to the invention are described and a skilled person will understand that one may make several alterations and modifications to the described and shown embodiments that are within the scope of the invention as defined in the following claims.

## Claims

1. An impact energy absorbing device (5) for a child safety seat (1) adapted for receiving a child, **characterised in that** the impact energy absorbing device (5) comprises an edge (5A) and a sheet (5B), the edge (5A) extending over at least a part of a periphery of the sheet (5B), forming a support for the sheet (5B), where the sheet (5B) is provided with a plurality of through-going incisions (5C), a number of through-going incisions (5C) alternating between a positive and negative gradient over their length.

2. Impact energy absorbing device (5) according to claim 1,
**characterized in that** the each of the through-going incisions (5C) has a non-linear shape.

3. Impact energy absorbing device (5) according to claim 1 or 2,
**characterized in that** the plurality of through-going incisions (5C) have the same or different shape.

4. Impact energy absorbing device (5) according to claim 1 or 2,
**characterized in that** the through-going incision (5C) has a V-shaped form, a U-shaped form or the like.

5. Impact energy absorbing device (5) according to claim 1,
**characterized in that** the sheet (5B) is provided with a plurality of zones, where the through-going incisions (5C) provided in one zone have a different shape than the through-going incisions (5C) provided in another zone.

6. Impact energy absorbing device (5) according to claim 1,
**characterized in** the sheet (5B) is provided with a plurality of zones, where the plurality of through-going incisions (5C) provided within one zone have a different shape.

7. Impact energy absorbing device (5) according to any one of the proceeding claims,
**characterized in that** the sheet (5B) has a curved surface.

8. Impact energy absorbing device (5) according to claim 1,
**characterized in that** the through-going incisions (5C) have the same or different length and/or width.

9. Impact energy absorbing device (5) according to claim 1,
**characterized in that** the through-going incisions (5C) are arranged with a same distance or space between them or a different distance or space between them.

10. Impact energy absorbing device (5) according to claim 1,
**characterized in that** the sheet (5B) has a same or different cross-sectional thickness over its surface.

11. Impact energy absorbing device (5) according to claim 1,
**characterized in that** the edge (5A) and sheet (5B) form an angle between them.

12. Impact energy absorbing device (5) according to claim 1,
**characterized in that** the edge (5A) over at least a part of its length is provided with a plurality of elongated openings (5D).

13. Impact energy absorbing device (5) according to any of the proceeding claims,
**characterized in that** the impact energy absorbing device (5) has a U-shaped form, where each side of the U-shaped form and a bottom of the U-shaped form is provided with a plurality of incisions (5C), thereby providing three zones in the impact energy absorbing device (5), each zone being divided by a none-impact absorbing area.

14. Impact energy absorbing device (5) according to claim 13,
**characterized in that** the edge (5A) at each end of the impact energy absorbing device (5) is provided with a plurality of elongated openings (5D), where the plurality of elongated openings (5D) will extend over at least a part of a circumference of the edge (5A).

15. A child safety seat (1) comprising a seat body (2) adapted for receiving a child, the seat body (2) comprising a sitting portion (2A), a backrest portion (2B) and a head rest portion (2C), where first and second side wings (3) extend over at least a part of the seat body (2),
c**haracterized in that** the child safety seat (1) further comprises at least one impact energy absorbing device (5) according to any of the proceeding claims 1-14.

16. Child safety seat according to claim 15,
**characterized in that** each of the first and second side wings (3) comprises at least one impact energy absorbing device (5).

17. Child safety seat according to claim 16,
**characterized in that** each of the first and second side wings (3) comprises an inwardly facing interior surface being provided with at least one hollow or recess (4) accommodating the impact energy absorbing device (5).

18. Child safety seat (1) according to any of the proceeding claims 16-17,
**characterized in that** the hollow or recess (4) encircles or encloses the impact energy absorbing device (5) partly or entirely.

19. Child safety seat (1) according to claim 15,
**characterized in that** the head rest portion (2C) comprises at least one impact energy absorbing device (5).

20. Child safety seat (1) according to claim 18,
**characterized in that** the head rest portion (2C) is integrated in the child safety seat (1) or is a separate part provided to be connected to the child safety seat (1).

21. Child safety seat (1) according to any one of the proceeding claims,
**characterized in that** the child safety seat (1) further comprises fastening means for fastening the child safety seat (1) to a vehicle seat in form of two or more Isofix connectors or guiding grooves, slits or the like.

## Patentansprüche

1. Aufprallenergieabsorptionsvorrichtung (5) für einen Kindersicherheitssitz (1), der zum Aufnehmen eines Kindes ausgelegt ist, **dadurch gekennzeichnet, dass** die Aufprallenergieabsorptionsvorrichtung (5) eine Kante (5A) und eine Lage (5B) umfasst, wobei sich die Kante (5A) über zumindest einen Teil eines Umfangs der Lage (5B) erstreckt und eine Stütze für die Lage (5B) bildet, wobei die Lage (5B) mit einer Vielzahl von durchgehenden Einschnitten (5C) bereitgestellt ist, wobei sich eine Anzahl an durchgehenden Einschnitten (5C) zwischen einem positiven und einem negativen Gradienten über ihre Länge abwechselt.

2. Aufprallenergieabsorptionsvorrichtung (5) nach Anspruch 1,
**dadurch gekennzeichnet, dass** jeder der durchgehenden Einschnitte (5C) eine nichtlineare Form aufweist.

3. Aufprallenergieabsorptionsvorrichtung (5) nach Anspruch 1 oder 2,
**dadurch gekennzeichnet, dass** die Vielzahl von durchgehenden Einschnitten (5C) die gleiche oder unterschiedliche Form aufweist.

4. Aufprallenergieabsorptionsvorrichtung (5) nach Anspruch 1 oder 2,
**dadurch gekennzeichnet, dass** der durchgehende Einschnitt (5C) eine V-förmige Form, eine U-förmige Form oder dergleichen aufweist.

5. Aufprallenergieabsorptionsvorrichtung (5) nach Anspruch 1,
**dadurch gekennzeichnet, dass** die Lage (5B) mit einer Vielzahl von Zonen bereitgestellt ist, wobei die durchgehenden Einschnitte (5C), die in einer Zone bereitgestellt sind, eine unterschiedliche Form als die durchgehenden Einschnitte (5C), die in einer anderen Zone bereitgestellt sind, aufweisen.

6. Aufprallenergieabsorptionsvorrichtung (5) nach Anspruch 1,
**dadurch gekennzeichnet, dass** die Lage (5B) mit einer Vielzahl von Zonen bereitgestellt ist, wobei die Vielzahl von durchgehenden Einschnitten (5C), die innerhalb einer Zone bereitgestellt ist, eine unterschiedliche Form aufweist.

7. Aufprallenergieabsorptionsvorrichtung (5) nach einem der vorhergehenden Ansprüche,
**dadurch gekennzeichnet, dass** die Lage (5B) eine gekrümmte Oberfläche aufweist.

8. Aufprallenergieabsorptionsvorrichtung (5) nach Anspruch 1,
**dadurch gekennzeichnet, dass** die durchgehenden Einschnitte (5C) die gleiche oder unterschiedliche Länge und/oder Breite aufweisen.

9. Aufprallenergieabsorptionsvorrichtung (5) nach Anspruch 1,
**dadurch gekennzeichnet, dass** die durchgehenden Einschnitte (5C) mit einem gleichen Abstand oder Raum zwischen ihnen oder einem unterschiedlichen Abstand oder Raum zwischen ihnen angeordnet sind.

10. Aufprallenergieabsorptionsvorrichtung (5) nach Anspruch 1,
**dadurch gekennzeichnet, dass** die Lage (5B) eine gleiche oder unterschiedliche Querschnittsdicke über ihre Oberfläche aufweist.

11. Aufprallenergieabsorptionsvorrichtung (5) nach Anspruch 1,
**dadurch gekennzeichnet, dass** die Kante (5A) und die Lage (5B) einen Winkel zwischen ihnen bilden.

12. Aufprallenergieabsorptionsvorrichtung (5) nach Anspruch 1,
**dadurch gekennzeichnet, dass** die Kante (5A) über zumindest einen Teil ihrer Länge mit einer Vielzahl von länglichen Öffnungen (5D) bereitgestellt ist.

13. Aufprallenergieabsorptionsvorrichtung (5) nach einem der vorhergehenden Ansprüche,
**dadurch gekennzeichnet, dass** die Aufprallenergieabsorptionsvorrichtung (5) eine U-förmige Form aufweist, wobei jede Seite der U-förmigen Form und eine Unterseite der U-förmigen Form mit einer Vielzahl von Einschnitten (5C) bereitgestellt ist, wodurch drei Zonen in der Aufprallenergieabsorptionsvorrichtung (5) bereitgestellt sind, wobei jede Zone durch einen Nichtaufprallabsorptionsbereich unterteilt ist.

14. Aufprallenergieabsorptionsvorrichtung (5) nach Anspruch 13,
**dadurch gekennzeichnet, dass** die Kante (5A) an jedem Ende der Aufprallenergieabsorptionsvorrichtung (5) mit einer Vielzahl von länglichen Öffnungen (5D) bereitgestellt ist, wobei sich die Vielzahl von länglichen Öffnungen (5D) über zumindest einen Teil eines Umfangs der Kante (5A) erstreckt.

15. Kindersicherheitssitz (1), umfassend einen Sitzkörper (2), der zum Aufnehmen eines Kindes ausgelegt ist, wobei der Sitzkörper (2) einen Sitzabschnitt (2A), einen Rückenlehnenabschnitt (2B) und einen Kopflehnenabschnitt (2C) umfasst, wobei sich erste und zweite Seitenflügel (3) über zumindest einen Teil des Sitzkörpers (2) erstrecken,
**dadurch gekennzeichnet, dass** der Kindersicherheitssitz (1) ferner zumindest eine Aufprallenergieabsorptionsvorrichtung (5) nach einem der vorhergehenden Ansprüche 1-14 umfasst.

16. Kindersicherheitssitz nach Anspruch 15,
**dadurch gekennzeichnet, dass** jeder von dem ersten und dem zweiten Seitenflügel (3) zumindest eine Aufprallenergieabsorptionsvorrichtung (5) umfasst.

17. Kindersicherheitssitz nach Anspruch 16,
**dadurch gekennzeichnet, dass** jeder von dem ersten und dem zweiten Seitenflügel (3) eine nach innen weisende Innenoberfläche umfasst, die mit zumindest einer Aussparung oder Vertiefung (4) bereitgestellt ist, welche die Aufprallenergieabsorptionsvorrichtung (5) unterbringt.

18. Kindersicherheitssitz (1) nach einem der vorhergehenden Ansprüche 16-17,
**dadurch gekennzeichnet, dass** die Aussparung oder Vertiefung (4) die Aufprallenergieabsorptionsvorrichtung (5) teilweise oder vollständig umgibt oder umschließt.

19. Kindersicherheitssitz (1) nach Anspruch 15,
**dadurch gekennzeichnet, dass** der Kopflehnenabschnitt (2C) zumindest eine Aufprallenergieabsorptionsvorrichtung (5) umfasst.

20. Kindersicherheitssitz (1) nach Anspruch 18,
**dadurch gekennzeichnet, dass** der Kopflehnenabschnitt (2C) in den Kindersicherheitssitz (1) integriert ist oder ein separater Teil ist, der bereitgestellt ist, um mit dem Kindersicherheitssitz (1) verbunden zu sein.

21. Kindersicherheitssitz (1) nach einem der vorhergehenden Ansprüche,
**dadurch gekennzeichnet, dass** der Kindersicherheitssitz (1) ferner Befestigungsmittel zum Befestigen des Kindersicherheitssitzes (1) an einem Fahrzeugsitz in Form von zwei oder mehr Isofixverbindern oder Führungsnuten, Schlitzen oder dergleichen umfasst.

## Revendications

1. Dispositif d'absorption d'énergie d'impact (5) pour un siège de sécurité pour enfant (1) adapté pour recevoir un enfant, **caractérisé en ce que** le dispositif d'absorption d'énergie d'impact (5) comprend un bord (5A) et une feuille (5B), le bord (5A) s'étendant sur au moins une partie d'une périphérie de la feuille (5B), formant un support pour la feuille (5B), où la feuille (5B) est pourvue d'une pluralité d'incisions traversantes (5C), un nombre d'incisions traversantes (5C) alternant entre un gradient positif et négatif sur leur longueur.

2. Dispositif d'absorption d'énergie d'impact (5) selon la revendication 1,
**caractérisé en ce que** chacune des incisions traversantes (5C) présente une forme non linéaire.

3. Dispositif d'absorption d'énergie d'impact (5) selon la revendication 1 ou 2,
**caractérisé en ce que** la pluralité d'incisions traversantes (5C) présentent la même forme ou une forme différente.

4. Dispositif d'absorption d'énergie d'impact (5) selon la revendication 1 ou 2,
**caractérisé en ce que** l'incision traversante (5C) présente une forme en V, une forme en U ou similaire.

5. Dispositif d'absorption d'énergie d'impact (5) selon la revendication 1,
**caractérisé en ce que** la feuille (5B) est pourvue d'une pluralité de zones, où les incisions traversantes (5C) prévues dans une zone présentent une forme différente des incisions traversantes (5C) prévues dans une autre zone.

6. Dispositif d'absorption d'énergie d'impact (5) selon la revendication 1,
**caractérisé en ce que** la feuille (5B) est pourvue d'une pluralité de zones, où la pluralité d'incisions traversantes (5C) prévues dans une zone présentent une forme différente.

7. Dispositif d'absorption d'énergie d'impact (5) selon l'une quelconque des revendications précédentes,
**caractérisé en ce que** la feuille (5B) possède une surface incurvée.

8. Dispositif d'absorption d'énergie d'impact (5) selon la revendication 1,
**caractérisé en ce que** les incisions traversantes (5C) possèdent une longueur identique ou différente et/ou une largeur identique ou différente.

9. Dispositif d'absorption d'énergie d'impact (5) selon la revendication 1,
**caractérisé en ce que** les incisions traversantes (5C) sont agencées avec une même distance ou un même espace entre elles ou une distance ou un espace différent entre elles.

10. Dispositif d'absorption d'énergie d'impact (5) selon la revendication 1,
**caractérisé en ce que** la feuille (5B) possède une épaisseur transversale identique ou différente sur sa surface.

11. Dispositif d'absorption d'énergie d'impact (5) selon la revendication 1,
**caractérisé en ce que** le bord (5A) et la feuille (5B) forment un angle entre eux.

12. Dispositif d'absorption d'énergie d'impact (5) selon la revendication 1,
**caractérisé en ce que** le bord (5A) sur au moins une partie de sa longueur est pourvu d'une pluralité d'ouvertures allongées (5D).

13. Dispositif d'absorption d'énergie d'impact (5) selon l'une quelconque des revendications précédentes,
**caractérisé en ce que** le dispositif d'absorption d'énergie d'impact (5) présente une forme en U, où chaque côté de la forme en U et un fond de la forme en U sont pourvus d'une pluralité d'incisions (5C), fournissant ainsi trois zones dans le dispositif d'absorption d'énergie d'impact (5), chaque zone étant divisée par une zone de non absorption d'impact.

14. Dispositif d'absorption d'énergie d'impact (5) selon la revendication 13,
**caractérisé en ce que** le bord (5A) au niveau de chaque extrémité du dispositif d'absorption d'énergie d'impact (5) est pourvu d'une pluralité d'ouvertures allongées (5D), où la pluralité d'ouvertures allongées (5D) s'étend sur au moins une partie d'une circonférence du bord (5A).

15. Siège de sécurité pour enfant (1) comprenant un corps (2) de siège adapté pour recevoir un enfant, le corps (2) de siège comprenant une partie d'assise (2A), une partie dossier (2B) et une partie repose-tête (2C), où des première et seconde ailes latérales (3) s'étendent sur au moins une partie du corps (2) de siège,
**caractérisé en ce que** le siège de sécurité pour enfant (1) comprend en outre au moins un dispositif d'absorption d'énergie d'impact (5) selon l'une quelconque des revendications précédentes 1-14.

16. Siège de sécurité pour enfant selon la revendication 15,
**caractérisé en ce que** chacune des première et seconde ailes latérales (3) comprend au moins un dispositif d'absorption d'énergie d'impact (5).

17. Siège de sécurité pour enfant selon la revendication 16,
**caractérisé en ce que** chacune des première et seconde ailes latérales (3) comprend une surface intérieure orientée vers l'intérieur pourvue d'au moins un creux ou évidement (4) recevant le dispositif d'absorption d'énergie d'impact (5).

18. Siège de sécurité pour enfant (1) selon l'une quelconque des revendications précédentes 16-17,
**caractérisé en ce que** le creux ou l'évidement (4) encercle ou entoure, partiellement ou entièrement, le dispositif d'absorption d'énergie d'impact (5).

19. Siège de sécurité pour enfant (1) selon la revendication 15,
**caractérisé en ce que** la partie repose-tête (2C) comprend au moins un dispositif d'absorption d'énergie d'impact (5).

20. Siège de sécurité pour enfant (1) selon la revendication 18,
**caractérisé en ce que** la partie repose-tête (2C) est intégrée dans le siège de sécurité pour enfant (1) ou est une partie séparée prévue pour être reliée au siège de sécurité pour enfant (1).

21. Siège de sécurité pour enfant (1) selon l'une quelconque des revendications précédentes,
**caractérisé en ce que** le siège de sécurité pour enfant (1) comprend en outre des moyens de fixation destinés à fixer le siège de sécurité pour enfant (1) à un siège de véhicule sous la forme de deux, ou plus, connecteurs Isofix ou rainures de guidage, fentes ou similaires.
